# EUROPEAN PATENT SPECIFICATION

(11) **EP 3 018 429 B1**
(45) Date of publication and mention of the grant of the patent: **20.03.2019**
(21) Application number: 15192969.2
(22) Date of filing: 04.11.2015
(51) Int. Cl.: F24S 25/30, F24S 25/613, F24S 25/65

(54) **MOUNTING ASSEMBLY**
MONTAGEANORDNUNG
ENSEMBLE DE MONTAGE

(30) Priority: 07.11.2014 NL 2013756
(43) Date of publication of application: 11.05.2016
(73) Proprietor: Freenergics B.V., 5281 RW Boxtel (NL)
(72) Inventor: BIEZE, Tammo Willem Nicolaas, 5262 RJ Vught (NL)
(74) Representative: Jilderda, Anne Ayolt

(56) References cited:
- EP-A1- 2 360 740
- EP-A2- 2 733 439
- DATABASE WPI Section PQ, Week 201281 Thomson Scientific, London, GB; Class Q74, AN 2012-L71097 XP002754878, -& NL 1 038 582 C (V&V HOLDING BV) 20 August 2012 (2012-08-20)

## Description

The present application relates to a mounting assembly for attaching a device to an underlying construction, comprising a base element with attaching means for attaching to the construction and comprising a coupling element for connection to the base element, wherein one of the base element and the coupling element comprises a coupling cavity for receiving therein a coupling member of another of the base element and the coupling element, and wherein the coupling member hooks into the coupling cavity in order to effect, during a relative rotation of the coupling element relative to the base element, a mutual connection therebetween wherein, in cross-section, an external contour of the coupling member and an internal contour of the coupling cavity at least substantially connect to each other over at least a part of their periphery.

Such an assembly is applied particularly for mounting of solar energy installations, such as photovoltaic (PV) solar panels and solar heat collectors (solar boiler), against an underlying roof construction. This is often a sloping roof surface covered with tiles or in other manner with a rainproof roof covering. A base element can be connected at different locations below and between an existing tiled roof covering to the underlying construction. The coupling member or the coupling cavity of the base element protrudes here between or outside the roof covering so as to thereby be accessible to the coupling element. The coupling member hooks into the coupling cavity, and the associated coupling element, in a rotation about an axis of the hinge thus formed between the coupling member and the coupling cavity, can be joined to one or more of such base elements to form a strong entity. This will subsequently form a reliable mounting basis, particularly for for instance one or more panel bodies such as PV solar panels and solar heat collectors. The panel can for instance be secured in recesses provided for this purpose on the coupling element using specifically adapted clamps. Such a mounting assembly applied in this manner is known for instance from Netherlands patent no. 1038582. A similar mounting assembly is disclosed in EP 2 733 439 A.

In the known mounting assembly the coupling member extends from the base element and the coupling element comprises the coupling cavity. Both the coupling member and the coupling cavity follow in cross-section at least a part of a roughly circular contour with substantially the same radius of curvature. Apart from a small clearance essential for a smooth relative rotation, a close-fitting whole is obtained from the hooking of the coupling member into the coupling cavity which does not allow movement between the two parts of the assembly, or hardly so, and which thereby provides a reliable mounting basis for the panels to be attached.

Such a coupling element not infrequently comprises in practice an elongate body which extends over a number of base elements in order to be coupled thereto. The base elements must for this purpose lie precisely in line with the coupling members or the coupling cavities so that the coupling element can simultaneously hook into and couple therewith in one pivoting movement. For placing of the base elements however, connection has to be made with an available roof construction which, in the case of both newly built and existing roofs, only rarely provides successive mounting bases lying precisely in line for the base elements. Owing to inevitable tolerances in the dimensioning of the roof construction and in the positioning of the base elements it is not always so simple in practice with the known mounting assembly to join a coupling element simultaneously to a number of spatially separated base elements without exerting great forces thereon.

The present invention therefore has for its object, among others, to provide an improved mounting assembly which particularly allows more tolerance in the relative positioning of such base elements in a row when a joint connection has to be made therewith.

In order to achieve the stated object a mounting assembly of the type stated in the preamble has the feature according to the invention that said contours of the coupling member and the coupling cavity each comprise a first arcuate part with a first radius of curvature from a first centre and an opposite second arcuate part with a second radius of curvature from a second centre spatially separated from the first centre, wherein the first arcuate part and the second arcuate part of each of the contours are mutually connected by a elongated part, wherein the second arcuate part of the coupling member is located distally of the first arcuate part, wherein the second radius of curvature is greater than the first radius of curvature, wherein the first and second arcuate parts of the contour of the coupling member, at least in the mutually connected situation, hook behind the corresponding respective first and second arcuate parts of the contour of the coupling cavity. The contour of the coupling member thus defines, just as the corresponding contour of the coupling cavity, not simply a circle but two separate arcuate parts which are spaced apart from each other by a elongated part. This elongated part provides additional length when the two parts are hooked together, and thereby additional tolerance for the case successive base elements do not lie exactly in line. Apart from a small mutual clearance, the external contour of the coupling member does however connect closely to the internal contour of the coupling cavity in the fully coupled situation, and the coupling member hooks on both sides, i.e. with both arcuate parts, behind the corresponding arcuate parts in the contour of the coupling cavity so that a reliable and rigid mounting basis is ultimately obtained for the device to be attached.

The smaller radius of curvature of the proximal arcuate part provides more space for the distal arcuate part to rotate thereover and nevertheless finally hook therebehind during coupling of the two parts of the assembly. An exceptionally user-friendly mounting system is thus provided in practice. A particular embodiment of the mounting assembly more specifically has the feature in this context that, in mutual ratio, in respect of the coupling member the first radius of curvature amounts to about 6.7 millimetres, the second radius of curvature to about 7.0 millimetres, that the elongated part spans a length therebetween of about 6.9 millimetres and that, in mutual ratio, in respect of the coupling cavity the first radius of curvature amounts to about 7.0 millimetres, the second radius of curvature to about 7.3 millimetres, that the elongated part spans a length therebetween of about 6.85 millimetres.

In a further preferred embodiment the mounting assembly according to the invention has the feature that the base element and the coupling element both comprise a stop and a bumper part which lie against each other in coupled state of the coupling element, and that the stop is provided with a snap member behind which the bumper part snaps, at least in fully coupled state of the coupling element. The stop and the bumper part bound the angle over which the base element and the coupling element are rotatable relative to each other after being hooked together. The bumper part will ultimately come up against the stop, whereby both parts are sufficiently hooked together and properly coupled to each other. The bumper part snaps here behind the snap member, so providing a clearly discernible and tactile indication hereof as well as a fixation of the two parts in this finally intended position thereof.

A particularly practical embodiment of the mounting assembly according to the invention has the feature that the coupling member comprises an insertion cavity open on either side and that a rib extends from the elongated part and extends inward into the insertion cavity and thus bounds, at least in cross-section, an imaginary circle. A suitable attaching means, such as a fitting screw bolt, can thus be introduced into the coupling cavity in the area of the imaginary circle while the rib prevents the relevant attaching means falling out of the insertion cavity. Using the attaching means and a suitable bracket the coupling member can if desired be mounted in a position oriented transversely of the base element in cases where this is required or at least desirable.

Although the base element and the coupling element can be embodied in various ways, a further preferred embodiment of the mounting assembly according to the invention has the feature that the base element comprises the coupling member and that the coupling element comprises an elongate profile over which the coupling cavity extends in axial direction over a number of base elements, and more particularly that at least one of the coupling element and the base element comprises an extruded body, in particular a body extruded from aluminium. The elongate coupling profile thus forces the base elements connected thereto onto a common line on which the device is then also attached. Because of the ingenious mutual adaptation according to the invention of the relevant contours of the coupling member and the coupling cavity, this line can be arranged in a manner which is natural and not forced, or hardly so. By making use of an extrusion body for the coupling profile and/or the base element a relatively low cost price can be fixed and serial production of the relevant part can be realized in simple manner.

In a further particular embodiment the mounting assembly according to the invention is characterized in that the base element is intended and configured to enter into a connection with a roof construction via the connecting means and that the coupling element is provided with attaching means for attachment of a panel body, in particular a photovoltaic solar panel or a solar heat collector.

The invention will now be further elucidated with reference to an exemplary embodiment and an accompanying drawing. In the drawing:
- figure 1: shows a cross-section of an exemplary embodiment of a mounting assembly according to the invention;
- figure 2: shows an enlarged detail view of a relevant part of a base element as applied in the assembly of figure 1;
- figure 3: shows an enlarged detail view of a relevant part of a coupling element as applied in the assembly of figure 1; and
- figures 4A-C: show the assembly of figure 1 at successive stages of a mutual coupling.
It is noted that the drawings are purely schematic and not drawn to scale. Some dimensions in particular may be exaggerated to greater or lesser extent for the sake of clarity. Corresponding parts are designated in the figures with the same reference numeral.

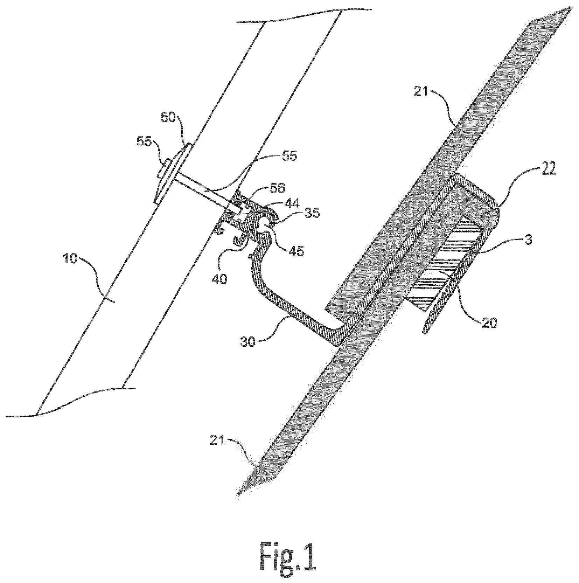

Figure 1 shows an example of the application of a mounting assembly according to the invention, wherein the assembly is utilized to connect a photovoltaic solar panel 10 to an underlying construction 20. Construction 20 here comprises a roof construction of a sloping tiled roof. The construction comprises as such a system of tile battens 20 into which roof tiles 21 hook with a protruding upper edge 22. Such a tile batten is also used in this example as mounting basis for the shown assembly.

The assembly comprises for this purpose a base element 30 which engages with attaching means in the form of a hook part 3 formed thereon behind and round such a tile batten 21. For improved grip and adhesion the hook part 3 is provided internally with a toothing and hook part 3 ideally clamps fixedly on the tile batten therewith. Base element 30 is separated from an extruded profile of aluminium and typically has a width transversely of the plane of drawing in the order of several centimetres and a thickness in the order of several millimetres. It is hereby possible to insert base element 30 between an existing roof covering 21 without any appreciable disruption to the covering thereof or without adversely affecting a water barrier thereof.

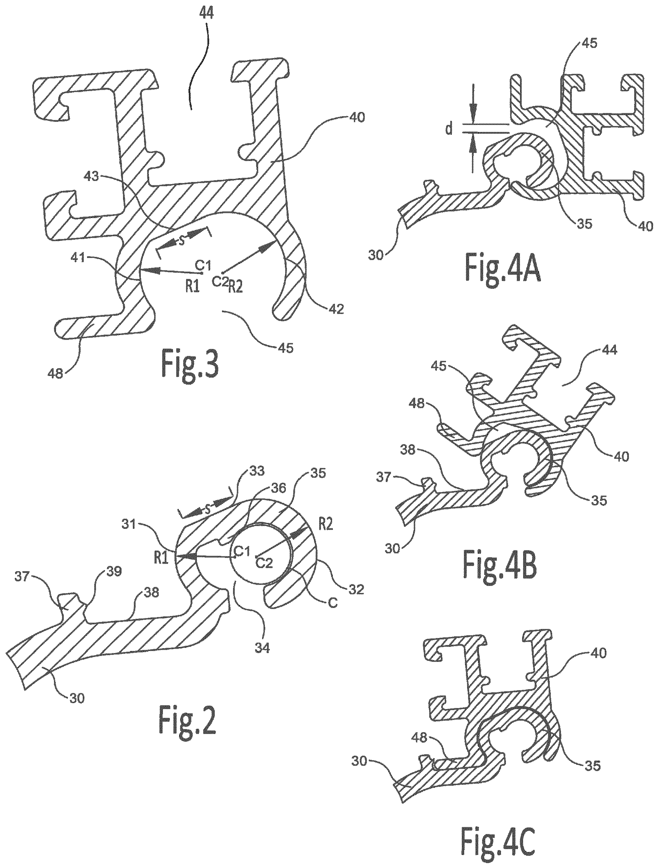

Formed at a distal outer end on the base element is a coupling member 35 which is shown enlarged and in more detail in figure 2. The mounting assembly also comprises a coupling element 40, see also figure 3, which is coupled via this coupling member 35 to the base element. Coupling element 40 comprises an elongate extrusion profile of aluminium typically having a length transversely of the plane of drawing of several decimetres to several metres and extends in this direction over a number of such base elements 30 and is connected in corresponding manner thereto. Figure 3 shows a cross-section of such a coupling element enlarged and in more detail.
Such a coupling element is provided at different heights of solar panel 10, typically at about one-fifth and at four-fifths of the height of solar panel 10 with dimensions in the order of 1650 x 990 x 40 millimetres. Serving for attachment of the solar panel are four clamps 50 which can be fixed and tightened in an axial groove 44 provided for this purpose in profile 40 using screw bolts 55 and nuts 56 fitting thereon or carriage bolts or the like.

A manner of coupling between coupling element 40 and a base element 30 is shown at successive stages in figures 4A-4C. Coupling element 40 is first placed over base elements 30 to be coupled thereto such that coupling members 35 of the individual base element come to lie in a coupling cavity 45 provided for this purpose in the coupling element, see figure 4A. This coupling cavity 45 extends, just as groove 44, in axial direction over a full length of coupling element 40.

As further shown in the detail of figures 2 and 3, coupling member 35 has an external contour which is at least partially substantially congruent with or at least of the same shape as an internal contour of coupling cavity 45 in coupling element 40. These contours each comprise a first arcuate part 31,41 with a first radius R1 from a first centre C1 and an opposite second arcuate part 32,42 with a second radius R2 from a second centre C2. The arcuate parts of both contours are mutually connected by a elongated part 33,43 of a length s. The elongated part hereby imparts an intermediate distance s between the two arcuate parts which manifests itself in additional clearance d during hooking of coupling members 35 into coupling cavity 45, see figure 4A. In the case successive base elements 30 do not lie wholly in line with each other, this is at least largely compensated by this clearance or tolerance, whereby mounting in-situ is greatly facilitated.

The coupling element is subsequently joined with coupling members 35, and thereby with base element 30, in a pivoting movement to form a connected assembly, see figure 4B. This movement is continued until the coupling element strikes with a bumper part 48 formed thereon against a stop 38 formed on base element 30, see figure 4C. This bounding of the relative rotation of the two parts 30,40 is also a visible and tactile indication that the coupling member is enclosed fully and firmly in the coupling cavity and the mutual connection between the two components has been properly realized. The strike member moreover snaps here behind a ridge 37 which is provided on the stop and on which is formed a snap member 39 provided for this purpose. This fixes the mutually coupled position and furthermore gives feedback that the connection has been performed correctly.

Despite the initial clearance *d* between coupling member and coupling element, see figure 4A, both parts nevertheless lie close-fittingly against and in each other in the final situation, wherein the initial clearance has largely disappeared. This is also made possible by a difference in radius between that R2 of the distal second arcuate part 32,42 and that R1 of the more proximal first arcuate part 31,41. More specifically, the second radius R2 is larger than the first radius R1, whereby coupling element 40 pivots through a larger radius R2 around coupling member 35 and finally hooks close-fittingly with the first arcuate part 41 thereof of a smaller radius R1 behind the corresponding arcuate part 31 of coupling member 35. Both arcuate parts 41,42 of the coupling cavity thus contribute toward realizing and maintaining the mutual connection between the coupling member and the coupling element.

In this example the first radius R1 in respect of coupling member 35 amounts to about 6.7 millimetres, the second radius R2 to about 7.0 millimetres, and both arcuate parts 31,32 are separated by a elongated part 33 with a length s of about 6.9 millimetres. In respect of coupling cavity 45 the dimensions are adapted hereto in the sense that in respect thereof the first radius R1 amounts to about 7.0 millimetres, the second radius R2 to about 7.3 millimetres, and both arcuate parts 41,42 are separated by a elongated part 43 with a length s of about 6.85 millimetres. These dimensions can of course be scaled in mutual relation to form a larger or smaller entity. What is important is that the ratio (r/s) of the (average) radius R1,R2 and the distance s between the two (imaginary) centres of these radii is greater than one. In the present example this ratio is about r/s = 1.56, thereby meeting this requirement. The final connection is sufficiently rigid and strong to guarantee a reliable mounting of a device such as the shown solar panel against an underlying (roof) construction, even under regular wind load and in other weather conditions.

In the shown example the coupling element is connected to the base element wherein an axis of the coupling cavity and an axis of the coupling member ultimately substantially coincide, or at least run parallel. The present mounting assembly however also provides a possibility, if a specific situation calls for this, to apply and connect the coupling element to the base element if desired in a transverse direction, roughly perpendicularly thereof. Coupling member 35 comprises for this purpose an internal cavity 34 in which a rib 36 extends inward from elongated part 33 to a position, at least in cross-section, beyond an imaginary circle C. A suitable attaching means, such as a fitting screw bolt, can be inserted herein while the rib prevents the relevant bolt falling out of insertion cavity 34.

Although the invention has been further elucidated above with reference to only a single embodiment, it will be apparent that the invention is by no means limited thereto. On the contrary, many variations and embodiments are still possible within the scope of the invention. The described mounting system can thus be applied not only for other sizes of photovoltaic panel but also for other panel bodies, such as for instance solar heat collectors. The invention also provides a solution for devices other than panels. This can relate in all cases to both sloping and flat roofs, and other underlying constructions are also suitable for the chosen mounting setup. The attaching means with which the base element is attached to the underlying construction can if desired be implemented in other manner here. In the shown exemplary embodiment use is made of a base element on which the coupling member is formed. The coupling member can instead extend from the coupling element, in which case the base element will comprise the coupling cavity.

## Claims

1. Mounting assembly for attaching a device to an underlying construction, comprising a base element (30) with attaching means for attaching to the construction and comprising a coupling element (40) for connection to the base element (30), wherein one of the base element and the coupling element comprises a coupling cavity (45) for receiving therein a coupling member (35) of another of the base element and the coupling element, and wherein the coupling member (35) hooks into the coupling cavity (45) in order to effect, during a relative rotation of the coupling element relative to the base element, a mutual connection therebetween wherein, in cross-section, an external contour of the coupling member (35) and an internal contour of the coupling cavity (45) at least substantially connect to each other over at least a part of their periphery, wherein said contours of the coupling member (35) and the coupling cavity (45) each comprise a first arcuate part (31, 41) with a first radius of curvature (R1) from a first centre (C1) and an opposite second arcuate part (32, 42) with a second radius of curvature (R2) from a second centre (C2) spatially separated from the first centre (C1), and wherein the first arcuate part (31, 41) and the second arcuate part (32, 42) of each of the contours are mutually connected by a elongated part (33, 43), **characterized in that** the second arcuate (32) of the coupling member (35) is located distally of the first arcuate (31) and that the second radius of curvature (R2) is greater than the first radius of curvature (R1), and **in that** the first (31) and second (32) arcuate parts of the contour of the coupling member (35), at least in the mutually connected situation, hook behind the corresponding respective first (41) and second (42) arcuate parts of the contour of the coupling cavity (45).

2. Mounting assembly as claimed in claim 1, **characterized in that** in mutual ratio, in respect of the coupling member (35), the first radius of curvature (R1) amounts to about 6.7 millimetres, the second radius of curvature (R2) to about 7.0 millimetres, that the elongated part (33) spans a length therebetween of about 6.9 millimetres, and that in mutual ratio, in respect of the coupling cavity (45), the first radius of curvature (R1) amounts to about 7.0 millimetres, the second radius of curvature (R2) to about 7.3 millimetres, that the elongated part (43) spans a length therebetween of about 6.85 millimetres.

3. Mounting assembly as claimed in one or more of the foregoing claims, **characterized in that** the base element (30) and the coupling element (40) respectively comprise a stop (38) and a bumper part (48) which lie against each other in coupled state of the coupling element, and that the stop (38) is provided with a snap member (39) behind which the bumper part (48) snaps, at least in fully coupled state of the coupling element.

4. Mounting assembly as claimed in one or more of the foregoing claims, **characterized in that** the coupling member (35) comprises an insertion cavity (34) open on either side and that a rib (36) extends from the elongated part (33) and extends inward into the insertion cavity (34) and thus bounds, at least in cross-section, an imaginary circle.

5. Mounting assembly as claimed in one or more of the foregoing claims, **characterized in that** the base element (30) comprises the coupling member (35) and that the coupling element (40) comprises an elongate profile over which the coupling cavity (45) extends in axial direction over a number of base el elements (30).

6. Mounting assembly as claimed in claim 5, **characterized in that** at least one of the coupling element (40) and the base element (30) comprises an extruded body, in particular a body extruded from aluminium.

7. Mounting assembly as claimed in one or more of the foregoing claims, **characterized in that** the base element (30) is intended and configured to enter into a connection with a roof construction via the connecting means and that the coupling element (40) is provided with attaching means for attachment of a panel body, in particular a photovoltaic solar panel (10) or a solar heat collector.

## Patentansprüche

1. Montageeinheit zum Befestigen einer Vorrichtung an einer zugrundeliegenden Konstruktion, umfassend ein Basiselement (30) mit Befestigungsmitteln zum Befestigen an der Konstruktion, und umfassend ein Kupplungselement (40) zum Anschließen an das Basiselement (30), wobei ein Basiselement und das Kupplungselement eine Kupplungsaussparung (45) zum Aufnehmen eines Kupplungselementes (35) oder eines anderen Basiselementes und des Kupplungselementes umfasst, und wobei das Kupplungselement (35) in die Kupplungsaussparung (45) einhakt, damit während einer Relativbewegung des Kupplungselementes relativ zum Basiselement eine gegenseitige Verbindung zwischen diesen bewirkt wird, wobei in einen Querschnitt wenigstens im Wesentlichen eine Außenkontur des Kupplungselementes (35) und eine Innenkontur der Kupplungsaussparung (45) sich wenigstens über einen Teil ihres Umfanges miteinander verbinden, wobei die genannten Konturen von Kupplungselement (35) und Kupplungsaussparung (45) jeweils umfassen: einen ersten Bogenteil (31, 41) mit einem ersten Krümmungsradius (R1) von einem ersten Zentrum (C1) und einen gegenüberliegenden zweiten Bogenteil (32, 42) mit einem zweiten Krümmungsradius (R2) von einem ersten Zentrum (C2) in einem Abstand vom ersten Zentrum (C1), wobei der erste Bogenteil (31, 41) und der zweite Bogenteil (32, 42) einer jeden der Konturen gegenseitig verbunden sind durch einen langgestreckten Teil (33, 43), **dadurch gekennzeichnet, dass** der zweite Bogenteil von Kupplungselement (35) vom ersten Bogenteil (31) entfernt angeordnet ist, und dass der zweite Krümmungsradius (R2) größer als der erste Krümmungsradius ist, und dass der erste (31) und der zweite (32) Bogenteil der Kontur des Kupplungselementes (35) wenigstens im gegenseitig verbundenen Zustand den entsprechenden ersten (41) und zweiten (42) Bogenteil der Kontur der Kupplungsaussparung (45) einhakt.

2. Montageeinheit nach Anspruch 1, **dadurch gekennzeichnet, dass** im gegenseitigen Verhältnis in Bezug auf das Kupplungselement (35) der erste Krümmungsradius (R1) etwa 6,7 mm beträgt, der zweite Krümmungsradius (R2) etwa 7,0 mm, dass der langgestreckte Teil (33) eine dazwischen befindliche Länge von etwa 6,9 mm umfasst, und dass im gegenseitigen Verhältnis in Bezug auf die Kupplungsaussparung (45) der erste Krümmungsradius (R1) etwa 7,0 mm beträgt, der zweite Krümmungsradius (R2) etwa 7,3 mm, und dass der langgestreckte Teil (43) eine Länge von etwa 6,85 mm aufweist.

3. Montageeinheit gemäß einem der vorausgegangenen Ansprüche, **dadurch gekennzeichnet, dass** das Basiselement (30) und das Kupplungselement (40) jeweils einen Anschlag (38) und ein Pufferteil (48) umfassen, die in eingekoppeltem Zustand des Kupplungselementes aneinander anliegen, und dass der Anschlag mit einem Schnappelement (39) hinter dem Pufferteil (48) wenigstens in vollständig eingekoppeltem Zustand des Kupplungselementes einschnappt.

4. Montageeinheit nach einem oder mehreren der vorausgegangenen Ansprüche, **dadurch gekennzeichnet, dass** das Kupplungselement eine auf einer Seite offene Einführaussparung (34) aufweist, und dass sich eine Rippe (36) vom langgestreckten Teil (33) aus in die Einführaussparung (34) hinein erstreckt und somit wenigstens im Querschnitt einen imaginären Kreis bildet.

5. Montageeinheit nach einem oder mehreren der vorausgegangenen Ansprüche, **dadurch gekennzeichnet, dass** das Basiselement (30) ein Kupplungselement (35) aufweist, und dass das Kupplungselement (40) ein langgestrecktes Profil aufweist, über welches sich die Kupplungsaussparung (45) in axialer Richtung über eine Anzahl von Basiselementen (30) hinweg erstreckt.

6. Montageeinheit nach Anspruch 5, **dadurch gekennzeichnet, dass** wenigstens ein Kupplungselement sowie das Basiselement einen extrudierten Körper umfasst, insbesondere aus Aluminium extrudiert.

7. Montageeinheit nach einem oder mehreren der vorausgegangenen Ansprüche, **dadurch gekennzeichnet, dass** das Basiselement (30) dazu dient und derart gestaltet ist, dass es über das Verbindungsmittel in Verbindung mit einer Dachkonstruktion eingreift, und dass das Kupplungselement (40) mit Befestigungsmitteln zum Befestigen eines Plattenkörpers versehen ist, insbesondere mit einem Photovoltaikpaneel oder einem Solarkollektor.

## Revendications

1. Ensemble de montage permettant de fixer un dispositif à une construction sous-jacente, comprenant un élément de base (30) doté de moyens de fixation pour une fixation à la construction et comprenant un élément de raccordement (40) pour une fixation à l'élément de base (30), l'un des éléments de base et l'élément de raccordement comprenant une cavité de raccordement (45) pour recevoir un membre de raccordement (35) d'un autre élément de base et de l'élément de raccordement, le membre de raccordement (35) s'accrochant dans la cavité de raccordement (45) dans le but d'opérer, lors d'une rotation relative de l'élément de raccordement par rapport à l'élément de base, un raccordement mutuel entre eux, un contour externe de l'élément de raccordement (35) et un contour interne de la cavité de raccordement (45) se raccordant au moins substantiellement l'un à l'autre, de manière transversale, sur au moins une partie de leur périphérie, lesdits contours du membre de raccordement (35) et de la cavité de raccordement (45) comprenant chacun une première partie arquée (31, 41) avec un premier rayon de courbure (R1) partant d'un premier centre (C1) et une seconde partie arquée opposée (32, 42) avec un second rayon de courbure (R2) partant d'un second centre (C2) séparé dans l'espace du premier centre (C1), la première partie arquée (31, 41) et la seconde partie arquée (32, 42) de chacun des contours étant mutuellement raccordées par une partie allongée (33, 43), **se caractérisant en ce que** la seconde partie arquée (32) du membre de raccordement (35) est située en position distale par rapport à la première partie arquée (31) et **en ce que** le second rayon de courbure (R2) est plus grand que le premier rayon de courbure (R1), et **en ce que** les première (31) et seconde (32) parties arquées du contour du membre de raccordement (35), au moins dans la configuration de raccordement mutuel, s'accrochent respectivement derrière chacune des première (41) et seconde (42) parties arquées correspondantes du contour de la cavité de raccordement (45).

2. Ensemble de montage selon la revendication 1, **se caractérisant en ce que** dans un rapport mutuel, en ce qui concerne le membre de raccordement (35), le premier rayon de courbure (R1) mesure environ 6.7 millimètres, le second rayon de courbure (R2) environ 7.0 millimètres, **en ce que** la partie allongée (33) s'étend entre eux sur une longueur d'environ 6.9 millimètres, et **en ce que** dans un rapport mutuel, en ce qui concerne la cavité de raccordement (45), le premier rayon de courbure (R1) mesure environ 7.0 millimètres, le second rayon de courbure (R2) environ 7.3 millimètres, **en ce que** la partie allongée (43) s'étend entre eux sur une longueur d'environ 6.85 millimètres.

3. Ensemble de montage selon une ou plusieurs des revendications précédentes, **se caractérisant en ce que** l'élément de base (30) et l'élément de raccordement (40) comprennent respectivement une butée (38) et une pièce tampon (48) qui reposent l'une contre l'autre lorsque l'élément de raccordement est en configuration de raccordement, et **en ce que** la butée (38) est pourvue d'un membre d'encliquetage (39) derrière lequel la pièce tampon (48) se clipse, au moins lorsque l'élément de raccordement est en configuration de raccordement total.

4. Ensemble de montage selon une ou plusieurs des revendications précédentes, **se caractérisant en ce que** l'élément de raccordement (35) comprend une cavité d'insertion (34) ouverte des deux côtés et **en ce qu'**une nervure (36) s'étend depuis la partie allongée (33) et s'étend vers l'intérieur dans la cavité d'insertion (34) et ainsi ferme, du moins de manière transversale, un cercle imaginaire.

5. Ensemble de montage selon une ou plusieurs des revendications précédentes, **se caractérisant en ce que** l'élément de base (30) comprend le membre de raccordement (35) et **en ce que** l'élément de raccordement (40) comprend un profilé allongé par-dessus lequel la cavité de raccordement (45) s'étend en direction axiale par-dessus un certain nombre d'éléments de base (30).

6. Ensemble de montage selon la revendication 5, **se caractérisant en ce que** au moins un des éléments de raccordement (40) et l'élément de base (30) comprennent un corps extrudé, en particulier un corps extrudé en aluminium.

7. Ensemble de montage selon une ou plusieurs des revendications précédentes, **se caractérisant en ce que** l'élément de base (30) est prévu et configuré pour être fixé à une construction de couverture via les moyens de fixation et **en ce que** l'élément de raccordement (40) est pourvu de moyens d'attache permettant la fixation d'un panneau, en particulier un panneau solaire photovoltaïque (10) ou un collecteur de chaleur solaire.
